# EUROPÄISCHE PATENTANMELDUNG

(11) **EP 2 270 820 A2**
(43) Veröffentlichungstag der Anmeldung: **05.01.2011**
(21) Anmeldenummer: 10166310.2
(22) Anmeldetag: 17.06.2010
(51) Int. Cl.: H01B 7/04, H02G 11/00, H01B 7/40

(54) **Stromkabel und Stromversorgungseinrichtung**

(30) Priorität: 03.07.2009 DE 202009009220 U
(71) Anmelder: SCHÜCO International KG, 33609 Bielefeld (DE)
(72) Erfinder: Kupfer, Matthias, 33719, Bielefeld (DE)
(74) Vertreter: Dantz, Jan Henning

(57) **Zusammenfassung**

Stromkabel (10, 10', 10"), insbesondere für die Versorgung von bewegbaren Bauteilen, mit mindestens zwei Adern (20, 22; 20', 22'; 20", 22") als elektrischen Leitern, die in einem Formkörper aufgenommen sind, wobei eine erste Ader (20; 20'; 20") in einem ersten Teil (11, 11', 1") des Formkörpers und eine zweite Ader (22; 22'; 22") in einem zweiten Teil (12, 12', 12") des Formkörpers aufgenommen sind, wobei der erste Teil (11, 1', 11") des Formkörpers relativ zu dem zweiten Teil (12, 12', 12") des Formkörpers an einem Filmscharnier (13, 73', 13") um eine Achse parallel zu den Adern (20, 22; 20', 22'; 20", 22") um mindestens 90° verschwenkbar ausgebildet ist.

## Beschreibung

Die vorliegende Erfindung betrifft ein Stromkabel, insbesondere für die Versorgung von bewegbaren Bauteilen, mit mindestens zwei Adern als elektrischen Leitern, die in einem Formkörper aufgenommen sind, wobei eine erste Ader in einem ersten Teil des Formkörpers und eine zweite Ader in einem zweiten Teil des Formkörpers aufgenommen ist, sowie eine Stromversorgungseinrichtung.

Es gibt Stromkabel, die einen kreisrunden Querschnitt aufweisen und in einer Ummantelung ein oder mehrere stromführende Adern aufweisen, die über den Querschnitt verteilt sind. Solche auch als Rundkabel bezeichneten Stromkabel besitzen den Nachteil, dass sie nicht um kleine Radien gebogen werden können, da sich bei kleinen Radien unterschiedliche Längen für die verschiedenen Adern ergeben. Diese unterschiedlichen Radien werden insbesondere dann zum Nachteil, wenn die Kabel über einen kleinen Radius abrollen, was bei häufiger Bewegung zu Beschädigungen bis hin zum Kurzschluss führen kann.

Aus diesem Grunde sind bei bewegten Bauteilen Flachkabel bekannt, bei denen die einzelnen Adern nebeneinander in einer Ebene angeordnet sind. Solche Flachkabel lassen sich in engen Radien gut in einer Ebene biegen, allerdings ist ein Biegen in einer anderen Ebene fast unmöglich. Ferner lassen sich Flachkabel nur schlecht durch Öffnungen an Bauteilen einführen, da die flache Form eine aufwändige Bearbeitung des Bauteils erforderlich macht. Gerade bei Schiebetüren besteht das Problem, dass ein Stromkabel zur Versorgung und/oder Steuerung in mehreren Ebenen gebogen werden muss, und zudem im Bereich einer Biegeschlaufe enge Biegeradien auftreten.

Es ist daher Aufgabe der vorliegenden Erfindung, ein Stromkabel, insbesondere für die Versorgung von bewegbaren Bauteilen, zu schaffen, das sich auf einfache Weise in mehreren Ebenen biegen lässt und flexibel an unterschiedliche Einbausituationen angepasst werden kann.

Diese Aufgabe wird mit einem Stromkabel mit den Merkmalen des Anspruches 1 sowie einer Stromversorgungseinrichtung mit den Merkmalen des Anspruches 11 gelöst.

Das erfindungsgemäße Stromkabel weist einen zweiteiligen Formkörper auf, wobei in jedem Teil des Formkörpers mindestens eine Ader vorgesehen ist und der erste Teil des Formkörpers relativ zu dem zweiten Teil des Formkörpers an einem Filmscharnier um eine Achse parallel zu den Adern um mindestens 90° verschwenkbar ausgebildet ist. Dadurch kann die Querschnittsform des Stromkabels an den jeweiligen Einsatzzweck angepasst werden. Insbesondere ist es möglich, das Stromkabel durch Verschwenken des ersten und des zweiten Teils des Formkörpers relativ zueinander so umzuformen, dass ein Verschwenken des gesamten Stromkabels in mehrere Ebenen erleichtert wird. Zudem kann eine kompakte Querschnittsform durch ein Zusammenklappen des Formkörpers erreicht werden, der sich gut durch Öffnungen an Bauteilen durchführen lässt.

In einer vorteilhaften Ausgestaltung ist ein Verschwenken des ersten Teils des Formkörpers relativ zu dem zweiten Teil um mehr als 120°, insbesondere um etwa 180°, möglich. Dadurch kann das Stromkabel von einer im Wesentlichen flachen Konfiguration, bei der die Vorteile eines Flachkabel genutzt werden, eine zusammengeklappte Position, in der die Vorteile eines sogenannten Rundkabels genutzt werden, überführt werden.

Der erste und der zweite Teil des Formkörpers weisen vorzugsweise jeweils eine ebene Anlagefläche auf, die in einer ersten Position eine gemeinsame Ebene ausbilden und in einer zweiten zusammengeklappten Position aneinander anliegen. Dadurch kann auf einfache Weise ein Übergang von einer flachen Bauform zu einer kompakten Bauform erreicht werden. An den Anlageflächen kann dabei eine Klebemittelschicht vorgesehen sein, die ein Zusammenkleben ermöglicht, wenn die zusammengeklappte Position des Stromkabels erforderlich ist, aber auch dazu dienen kann, das aufgeklappte Stromkabel an einer Oberfläche anzukleben.

In einer bevorzugten Ausgestaltung sind der erste und der zweite Teil des Formkörpers im Querschnitt im Wesentlichen halbkreisförmig ausgebildet, so dass im zusammengeklappten Zustand des Formkörpers ein im Wesentlichen kreisförmiger Querschnitt erhalten wird und die Vorteile eines Rundkabels genutzt werden können. Insbesondere lässt sich das Stromkabel durch kreisförmige Öffnungen an Bauteilen einführen.

Im jedem Teil des Formkörpers können ein oder mehrere Adern angeordnet sein. Gerade wenn neben der elektrischen Stromversorgung auch noch Steuerungskabel notwendig sind, können eine Vielzahl von Adern in dem Stromkabel vorgesehen sein. Wenn in einem Teil des Formkörpers mehrere Adern vorhanden sind, besitzen die Adern vorzugsweise etwa den selben Abstand zu der ebenen Anlagefläche, damit bei einem Abrollen des Stromkabels und entsprechenden Krümmen der Anlagefläche um eine Achse senkrecht zu den Adern nur geringe Reibungskräfte auftreten.

Vorzugsweise sind die Adern in einer isolierenden Ummantelung in dem Formkörper angeordnet. Dadurch können Standardadern verwendet werden, die mit einem entsprechenden Schutzmantel versehen sind. Als Adern können unterschiedliche elektrische Leiter zum Einsatz kommen.

Um ein leichtgängiges Konfigurieren des Stromkabels zu ermöglichen, weist das Filmscharnier vorzugsweise eine Materialstärke zuwischen 0,1 mm bis 0,5 mm, insbesondere etwa 0,2 mm, auf. Dadurch kann das Stromkabel mit geringem Kraftaufwand verschwenkt werden, ohne dass die Gefahr besteht, dass die beiden Teile des Formkörpers ungewollt auseinanderreißen.

Für eine einfache Herstellung des Stromkabels werden der Formkörper und das Filmscharnier aus einem Kunststoff, insbesondere aus Polyurethan, hergestellt.

Erfindungsgemäß wird auch eine Stromversorgungseinrichtung bereitgestellt, bei der das erfindungsgemäße Stromkabel über ein Führungselement konfiguriert ist, um das Stromkabel von einer aufgeklappten Position in eine zusammengeklappte Position zu überführen. Das Stromkabel weist an gegenüberliegenden Seiten des Führungselementes Abschnitte auf, die einen unterschiedlichen Querschnitt besitzen. Durch das Führungselement wird das Stromkabel in der gewünschten Querschnittsform fixiert, wobei das Führungselement auch an einem Bauteil festlegbar ist, um eine exakte Positionierung des Stromkabels zu ermöglichen.

Vorzugsweise weist das Führungselement ein Gehäuse auf, das an gegenüberliegenden Seiten eine Öffnung zum Durchführen des Stromkabels aufweist, wobei die beiden Öffnungen einen unterschiedlichen Querschnitt aufweisen. Dadurch ist festgelegt, in welcher Querschnittsform das Stromkabel das Gehäuse des Führungselementes verlässt. In dem Gehäuse ist dann ein Übergang ausgebildet, in dem das Stromkabel von einer aufgeklappten in eine zusammengeklappte Position überführt wird, wobei der Übergang zumindest teilweise auch eine Anlage für das Stromkabel ausbilden kann. Das Stromkabel kann je nach Bedarf an beliebig vielen Stellen im Längsverlauf in seiner Querschnittsform verändert werden.

Die Erfindung wird nachfolgend anhand mehrerer Ausführungsbeispiele mit Bezug auf die beigefügten Zeichnungen erläutert. Es zeigen:
- Figuren 1 und 2: zwei schematische Ansichten einer Schiebetür mit einem erfindungsgemäßen Stromkabel;
- Figuren 3 und 4: zwei Querschnittsansichten des Stromkabels in unter- schiedlichen Positionen;
- Figur 5: eine Querschnittsansicht eines Rahmenprofils mit dem Stromkabel der Figuren 3 und 4;
- Figuren 6 und 7: zwei perspektivische Ansichten eines Führungselementes für das Stromkabel der Figuren 3 und 4;
- Figuren 8 und 9: zwei Ansichten eines modifizierten Ausführungsbeispieles eines erfindungsgemäßen Stromkabels, und
- Figuren 10 und 11: zwei Ansichten eines weiteren Ausführungsbeispieles ei- nes erfindungsgemäßen Stromkabels.

Eine Schiebetür 1 umfasst einen ortsfesten Blendrahmen 2, in dem ein bewegbarer Schiebeflügel 3 angeordnet ist. Der Schiebeflügel 3 kann entsprechend dem Pfeil in dem Blendrahmen 2 verschoben werden. Der Schiebeflügel 3 weist nicht näher dargestellte elektrische Verbraucher auf, beispielsweise einen Antrieb für die Verfahrbewegung, einen Antrieb und eine Steuerung für ein Verschattungselement, eine Verkabelung für Messgeräte, Lüftungseinrichtungen oder andere mit Strom zu versorgende Bauteile. Um diese Bauteile mit Strom zu versorgen, ist ein Stromkabel 5 vorgesehen, das mit einer Seite 6 in den Blendrahmen 2 eingeführt wird und über eine Wendeschlaufe 8 in den Schiebeflügel 3 eingeführt ist, so dass ein Anschluss 7 in dem Schiebeflügel 3 mit elektrischen Verbrauchern verbunden werden kann.

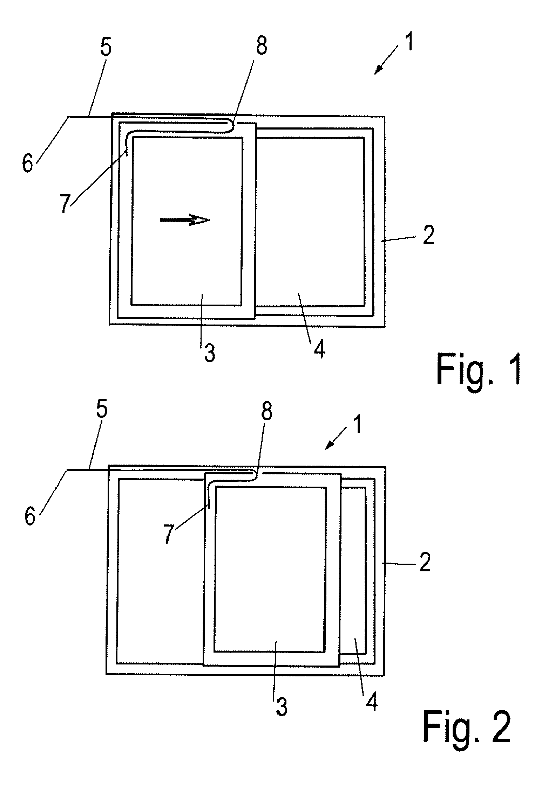

Wenn der Schiebeflügel 3 verfahren wird (Figur 2), dann verändert sich auch die Position der Wendeschlaufe 8. Das Stromkabel 5 wird daher im Bereich der Wendeschlaufe 8 beim Verfahren des Schiebeflügels 3 gebogen und abgerollt. Für einen kompakten Aufbau ist die Wendeschlaufe 8 besonders eng ausgeführt, so dass die Reibung im Bereich der Wendeschlaufe 8 minimiert werden muss. Im Bereich der Einführung des Stromkabels 5 in den Blendrahmen 2 ist eine kreisrunde Bohrung vorgesehen.

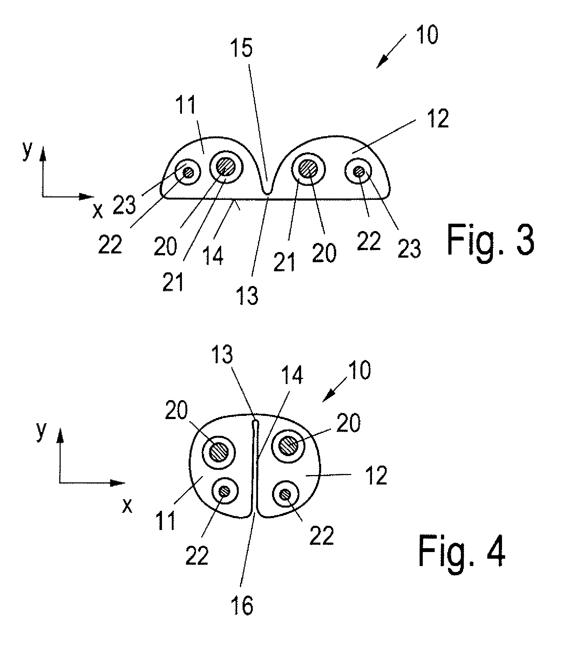

In den Figuren 3 und 4 ist ein Stromkabel 10 gezeigt, wie es beispielsweise bei einer Schiebetür 1 entsprechend den Figuren 1 und 2 eingesetzt werden kann. Das Stromkabel 10 umfasst einen Formkörper, der ein erstes Teil 11 und ein zweites Teil 12 aufweist. Das erste Teil 11 und das zweite Teil 12 sind im Querschnitt im Wesentlichen halbkreisförmig ausgebildet und an einer Seite über ein Filmscharnier 13 miteinander verbunden. In jedem Teil 11 und 12 befinden sich Adern 20 und 22, die als elektrische Leiter ausgebildet sind. Die Ader 20 weist einen größeren Durchmesser auf als die Ader 22. Um die Ader 20 ist eine elektrisch isolierende Ummantelung 21 angeordnet, während um die Ader 22 mit kleinerem Durchmesser ebenfalls eine elektrisch isolierende Ummantelung 23 vorgesehen ist.

In der Figur 3 ist das Stromkabel 10 in der aufgeklappten Position gezeigt, bei der die Anlageflächen 14 an dem ersten Teil 11 und dem zweiten Teil 12 eine gemeinsame Ebene ausbilden. Das Stromkabel 10 ist als eine Art Flachkabel ausgebildet und kann um die Achse X leicht gebogen werden. Diese Konfiguration ist im Bereich der WendeschCaufe 8 notwendig, wenn kleine Biegeradien erreicht werden sollen. Benachbart zu dem Filmscharnier 13 sind das erste Teil 11 und das zweite Tel 12 des Formkörpers über einen Spalt 15 voneinander getrennt. Das Filmscharnier 13 befindet sich an der Anlagefläche 14 bzw. bildet einen Teil davon aus.

In Figur 4 ist das Stromkabel 10 in einer zusammengeklappten Position gezeigt. Das erste Teil 11 und das zweite Teil 12 sind um eine Achse parallel zu den Adern 20 und 22 im Bereich des Filmscharniers 13 verschwenkt worden, so dass die Anlageflächen 14 nun aufeinander aufliegen. Es kann auch ein kleiner Spalt 16 zwischen den Anlageflächen 14 vorhanden sein, so dass der Schwenkwinkel etwa 180° beträgt. Das Stromkabel 10 besitzt nun einen im Wesentlichen kreisrunden Querschnitt und kann sowohl in X-Richtung als auch in Y-Richtung gebogen werden. Mit dieser Querschnittsform kann das Stromkabel besonders gut durch kreisförmige Öffnungen durchgeführt werden oder mit Anschlüssen verbunden werden.

Das Stromkabel 10 besitzt in der aufgeklappten Position der Figur 3 eine Breite von etwa 8 bis 10 mm, während der Durchmesser in der zusammengeklappten Position der Figur 4 bei rund 4 bis 5 mm liegt. Das Filmscharnier ist dünn ausgebildet und kann eine Stärke zwischen 0,1 bis 0,4 mm, insbesondere 0,2 mm aufweisen. Der Formkörper mit dem ersten Teil 11, dem zweiten Teil 12 und dem Filmscharnier 13 kann aus geschäumtem Material, insbesondere Polyurethan, bestehen, die Adern 20 und 22 bestehen vorzugsweise aus Kupfer und besitzen eine isolierende Ummantelung aus Weich-PVC.

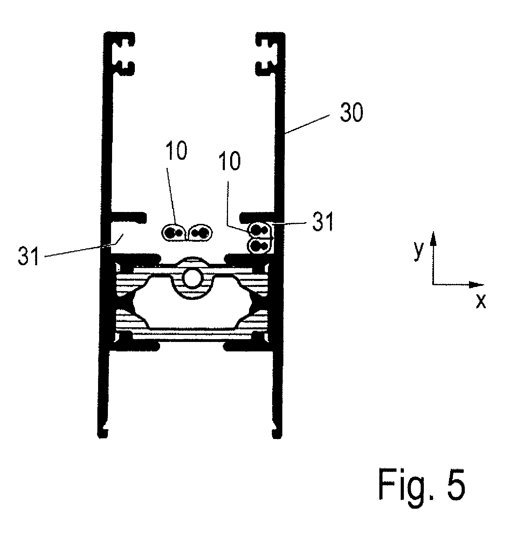

In Figur 5 ist das Stromkabel 10 in einer möglichen Einbausituation in einem Profil 30 eines Blendrahmens 2 oder eines Flügelrahmens gezeigt. In dem Rahmenprofil 30 kann das Stromkabel 10 in der in Figur 3 gezeigten Position geführt sein, insbesondere im Bereich einer Wendeschlaufe 8. Außerhalb dieser Wendeschlaufe 8 kann das Stromkabel 10 in einer Nut 31 in der zusammengeklappten Position der Figur 4 geführt sein, damit das Stromkabel 10 geschützt angeordnet ist.

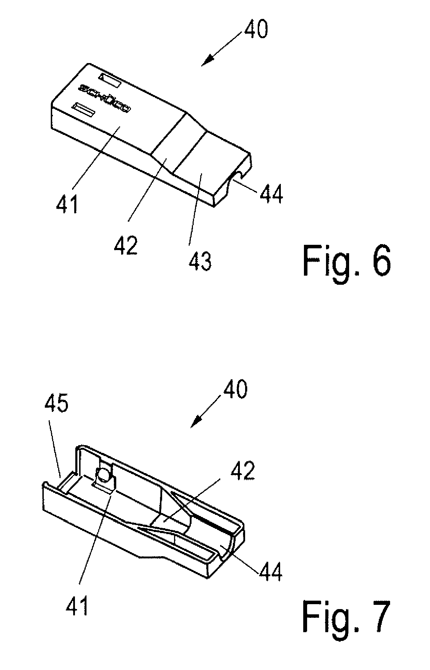

Um das Stromkabel 10 von der aufgeklappten Position (Figur 3) in die zusammengeklappte Position (Figur 4) zu überführen, ist ein Führungselement 40 vorgesehen, das ein Gehäuse aus Kunststoff aufweist. Das in den Figuren 6 und 7 dargestellte Führungselement 40 umfasst einen inneren Kanal, in dem das Stromkabel 10 von der aufgeklappten Position in die zusammengeklappte Position überführt ist. Hierfür sind an gegenüberliegenden Seiten des Führungselementes 40 Öffnungen 44 und 45 ausgebildet, die einen unterschiedlichen Querschnitt besitzen. An der Öffnung 44 kann das Stromkabel 10 nur in der zusammengeklappten Position austreten. An der gegenüberliegenden Seite ist eine Öffnung 45 mit größerem Querschnitt vorgesehen, der eine Breite aufweist, die der Breite des Stromkabels 10 in der aufgeklappten Position entspricht. In einem ersten Abschnitt 41 ist das Stromkabel 10 in dem Führungselement in der aufgeklappten Position aufgenommen, das dann einen Übergangsbereich 42 durchläuft, in dem die Wände des Kanals eine Anlagefläche ausbilden, um das Stromkabel 10 von der aufgeklappten in die zusammengeklappte Position zu überführen. In dem letzten Abschnitt 43 ist das Stromkabel 10 in der zusammengeklappten Position gehalten.

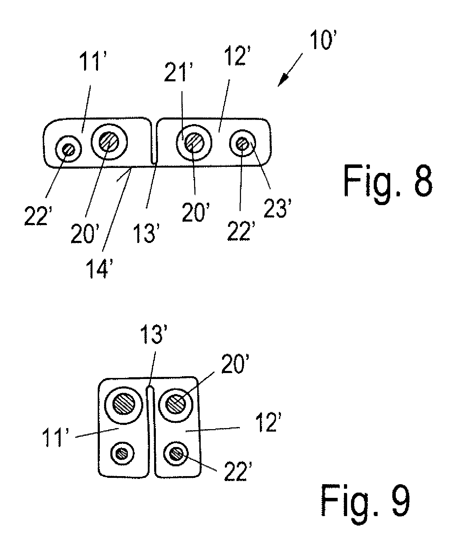

In Figur 8 und 9 ist ein modifiziertes Ausführungsbeispiel eines Stromkabels 10' gezeigt, das einen Formkörper mit einem ersten Teil 11' und einem zweiten Teil 12' aufweist, die über ein Filmscharnier 13' miteinander verbunden sind. Die Teile 11' und 12' besitzen eine im Wesentlichen rechteckige Querschnittsform, die an ihren Kanten leicht abgerundet ist. In jedem Teil 11' und 12' ist eine Ader 20' mit größerem Durchmesser und eine Ader 22' mit kleinerem Durchmesser angeordnet, wobei die Adern 20' und 22' durch eine elektrisch isolierende Ummantelung 21' bzw. 23' umgeben sind.

In der aufgeklappten Position des Stromkabels 10' (Figur 8) nimmt das Stromkabel 10' eine besonders geringe Höhe ein, beispielsweise beträgt die Höhe nur 2 bis 4 mm.

Das Filmscharnier 13' ist an einer unteren Anlagefläche 14' des ersten Teils 11' und des zweiten Teils 12' angeordnet, so dass die Teile 11' und 12' um etwa 180° verschwenkt werden können, bis die in Figur 9 gezeigte Position erreicht ist. Dann besitzt das Stromkabel 10' eine rechteckige bzw. quadratische Form und kann in unterschiedliche Richtungen gebogen werden.

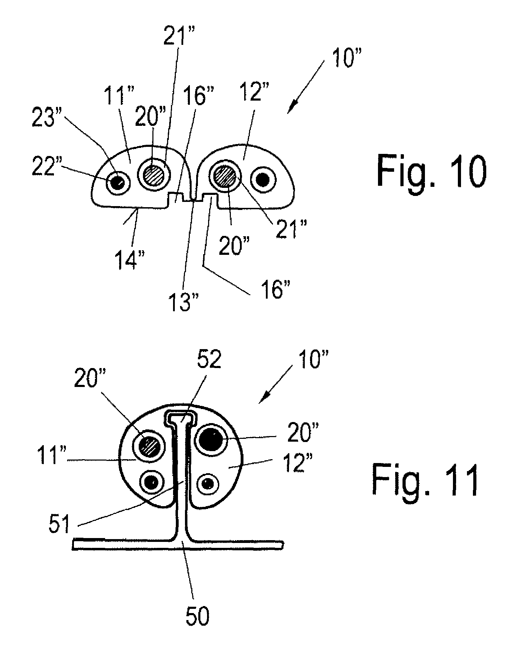

In den Figuren 10 und 11 ist ein weiteres Ausführungsbeispiel eines Stromkabels 10" gezeigt, das aus einem Formkörper aus geschäumtem Material besteht, der ein erste Teil 11" und ein zweites Teil 12" aufweist, die wie bei dem ersten Ausführungsbeispiel über ein Filmscharnier 13" miteinander verbunden sind. Jedes Teil 11" und 12" weist eine ebene Anlagefläche 14" auf, die in der aufgeklappten Position der Figur 10 eine gemeinsame Ebene ausbilden. In jedem Teil 11" und 12" des Formkörpers sind zwei Adern 20" und 22" angeordnet, die von einer isolierenden Ummantelung 21" bzw, 23" umgeben sind. An der ebenen Anlagefläche 14" jedes Teils 11" und 12" ist benachbart zu dem Filmscharnier 13" eine Nut 16" ausgespart.

Wenn das Stromkabel 10" von der aufgeklappten Position in die zusammengeklappte Position entsprechend Figur 11 verschwenkt wird, kann das Stromkabel 10" an einem leistenförmigen Vorsprung 51 eines Profils 50 festgelegt werden. An dem Vorsprung 51 ist an einer äußeren Kante eine Verdickung 52 in Form eines T-Profils angeordnet, das in die Nuten 16" an dem ersten Teil 11" und dem zweiten Teil 12" eingreift. Dadurch ist das Stromkabel 10" mechanisch an dem leistenförmigen Vorsprung 51 festgelegt, wobei zusätzlich an den Anlageflächen 14" der Teile 11" und 12" Klebemittel vorgesehen sein können, die das Stromkabel 10" an dem Vorsprung 51 verkleben.

In den dargestellten Ausführungsbeispielen sind jeweils zwei Adern 20 und 22 in den Teilen 11 bzw. 12 vorgesehen. Es ist natürlich auch möglich, nur eine Ader oder mehr als zwei Adern in jedem Teil 11 bzw. 12 vorzusehen, je nach Anwendungsfall. Ferner können die Größe, das Material und die Funktion der Adern 20 und 22 variiert werden, die einerseits zur Stromversorgung, aber andererseits auch zur Steuerung eingesetzt werden können.

Um das Stromkabel 10, 10', 10" in der aufgeklappten oder zusammengeklappten Position zu fixieren, können Halteelemente vorgesehen sein, beispielsweise Schellen, Formkörper oder andere Bauteile. Ferner können an dem Stromkabel 10, 10', 10" Rastmittel ausgebildet sein, die das Stromkabel 10, 10', 10" in der zusammengeklappten oder aufgeklappten Position fixieren.

## Patentansprüche

1. Stromkabel (10, 10', 10"), insbesondere für die Versorgung von bewegbaren Bauteilen, mit mindestens zwei Adern (20, 22; 20', 22'; 20", 22") als elektrischen Leitern, die in einem Formkörper aufgenommen sind, wobei eine erste Ader (20; 20'; 20") in einem ersten Teil (11, 11', 1 ") des Formkörpers und eine zweite Ader (22; 22'; 22") in einem zweiten Teil (12, 12', 12") des Formkörpers aufgenommen sind, **dadurch gekennzeichnet, dass** der erste Teil (11, 1', 11") des Formkörpers relativ zu dem zweiten Teil (12, 12', 12") des Formkörpers an einem Filmscharnier (13, 13', 13") um eine Achse parallel zu den Adern (20, 22; 20', 22'; 20", 22") um mindestens 90° verschwenkbar ausgebildet ist.

2. Stromkabel nach Anspruch 1, **dadurch gekennzeichnet, dass** ein Verschwenken des ersten Teils (11, 11', 11 ") des Formkörpers relativ zu dem zweiten Teil (12, 12', 12") des Formkörpers um mehr als 120°, insbesondere etwa 180°, möglich ist.

3. Stromkabel nach Anspruch 1 oder 2, **dadurch gekennzeichnet, dass** der erste und der zweite Teil (11, 12; 11', 12'; 11 ", 12") des Formkörpers jeweils eine ebene Anlagefläche (14, 14', 14") aufweisen, die in einer ersten Position eine gemeinsame Ebene ausbilden und in einer zweiten zusammengeklappten Position aneinander anliegen.

4. Stromkabel nach Anspruch 3, **dadurch gekennzeichnet, dass** an den Anlageflächen (14, 14', 14") eine Klebemittelschicht vorgesehen ist.

5. Stromkabel nach einem der Ansprüche 1 bis 4, **dadurch gekennzeichnet, dass** der erste und der zweite Teil (11, 12) des Formkörpers im Querschnitt im Wesentlichen halbkreisförmig ausgebildet sind.

6. Stromkabel nach einem der Ansprüche 1 bis 5, **dadurch gekennzeichnet, dass** in dem ersten und/oder zweiten Teil (11, 12; 11'" 12'11", 12") des Formkörpers mindestens zwei Adern (20, 22; 20', 22'; 20", 22") angeordnet sind.

7. Stromkabel nach Anspruch 6, **dadurch gekennzeichnet, dass** die Adern (20, 22; 20', 22'; 20", 22") etwa in demselben Abstand zu der ebenen Anlagefläche (14, 14', 14") angeordnet sind.

8. Stromkabel nach einem der Ansprüche 1 bis 7, **dadurch gekennzeichnet, dass** die Adern (20, 22; 20', 22'; 20", 22") in einer isolierenden Ummantelung (21, 23; 21, 23'; 21 ", 23") in dem Formkörper angeordnet sind.

9. Stromkabel nach einem der Ansprüche 1 bis 8, **dadurch gekennzeichnet, dass** das Filmscharnier (13, 13', 13") eine Materialstärke zwischen 0,1 bis 0,5 mm, insbesondere etwa 0,2 mm, aufweist.

10. Stromkabel nach einem der Ansprüche 1 bis 9, **dadurch gekennzeichnet, dass** der Formkörper und das Filmscharnier (13, 13',13") aus einem geschäumten Material, insbesondere aus Polyurethan, hergestellt sind.

11. Stromversorgungseinrichtung, **gekennzeichnet durch** ein Stromkabel (10, 10', 10") nach einem der vorhergehenden Ansprüche, wobei ein Führungselement (40) vorgesehen ist, um das Stromkabel (10) von einer aufgeklappten Position in eine zusammengeklappte Position zu überführen

12. Stromversorgungseinrichtung nach Anspruch 11, **dadurch gekennzeichnet, dass** das Führungselement (40) ein Gehäuse aufweist, das an gegenüberliegenden Seiten eine Öffnung (44, 45) zum Durchführen des Stromkabels (10) aufweist, und die beiden Öffnungen (44, 45) einen unterschiedlichen Querschnitt aufweisen.

13. Stromversorgungseinrichtung nach Anspruch 11 oder 12, **dadurch gekennzeichnet, dass** in dem Gehäuse ein Übergang (42) ausgebildet ist, in dem das Stromkabel (10, 10', 10") von einer aufgeklappten in eine zusammengeklappte Position überführt ist, wobei der Übergang (42) zumindest teilweise eine Anlage für das Stromkabel (10, 10', 10") ausbildet.

14. Verwendung eines Stromkabels nach einem der Ansprüche 1 bis 10 zur Versorgung und/oder Steuerung einer Schiebetür (1).
